# EUROPEAN PATENT APPLICATION

(11) **EP 4 556 153 A1**
(43) Date of publication of application: **21.05.2025**
(21) Application number: 24177694.7
(22) Date of filing: 23.05.2024
(51) Int. Cl.: B23K 26/142, B08B 5/04, B23K 26/14, B23K 26/21

(54) **WELDING APPARATUS AND METHOD WITH HORIZONTALLY IRRADIATED LASER**

(30) Priority: 16.11.2023 KR 20230159610
(71) Applicant: Samsung SDI Co., Ltd., Yongin-si, Gyeonggi-do 17084 (KR)
(72) Inventor: LEE, Jeongjoo, 17084 Yongin-si (KR)
(74) Representative: Marks & Clerk LLP

(57) **Abstract**

A laser welding apparatus includes a chamber configured to pass therethrough a laser beam irradiated transversely to a welding region between members to be welded; and a vortex formation section configured to connect the welding region between the members to be welded and the chamber, to supply the welding region with gas, and to form and discharge a vortex of the gas.

## Description

### BACKGROUND

### 1. Field

Aspects of embodiments of the present disclosure relate to a welding apparatus, and a secondary battery manufactured thereby.

### 2. Description of the Related Art

Unlike primary batteries that are not designed to be recharged, secondary batteries are designed to be discharged and recharged repeatedly. In general, a secondary battery includes an electrode assembly including a positive electrode and a negative electrode, a case accommodating the electrode assembly, an electrode terminal connected to the electrode assembly, a vent for discharging gas generated inside the case, and the like.

In the secondary battery, laser welding may be used to bond the components thereof. When a base material (member to be welded) is irradiated with a high-energy laser beam during laser welding, heat is generated and transferred to adjacent elements. In this case, fumes and spatter are generated due to the beam's high energy. The generated fumes and spatter may interfere with the transmission of the laser beam and may flow into the secondary battery or fall on the member to be welded.

The above information disclosed in this Background section is for enhancement of understanding of the background of the present disclosure, and therefore, it may contain information that does not constitute related (or prior) art.

### SUMMARY

Aspects of embodiments of the present disclosure are directed to an improved laser welding apparatus and method that perform welding of products such as secondary batteries with transverse (e.g., horizontal) laser irradiation to prevent or substantially impede fumes and spatter from flowing into the products and increase a flow of exhaust air using gas supply structure utilized for welding to perfectly (or better) discharge fumes and spatter.

Also, aspects of embodiments of the present disclosure are directed to a secondary battery manufactured using the above laser welding apparatus or method.

According to some embodiments of the present disclosure, there is provided a laser welding apparatus including: a chamber configured to pass therethrough a laser beam irradiated transversely to a welding region between members to be welded; and a vortex formation section configured to connect the welding region between the members to be welded and the chamber, to supply the welding region with gas, and to form and discharge a vortex of the gas.

In some embodiments, the vortex formation section includes: a gas layer formation part configured to supply the gas to the welding region; and a vortex gas outlet through which the vortex of the gas formed inside the vortex formation section is configured to exit.

In some embodiments, the chamber includes a release port configured to release the vortex of the gas formed in the vortex formation section out of the chamber.

In some embodiments, the laser welding apparatus further includes a fan configured to suck the vortex of the gas from the release port.

In some embodiments, the chamber includes a transparent glass shield configured to allow transmission of the laser beam irradiated transversely from the outside.

In some embodiments, the chamber further includes a glass shield vent in communication with the outside.

In some embodiments, the chamber includes at least one vent in communication with the outside.

In some embodiments, the vortex formation section includes a tapered tube whose diameter gradually decreases from the chamber to the welding region.

In some embodiments, the vortex formation section includes: a gas injection port configured to inject gas; and a gas supply passage configured to supply the gas injected through the gas injection port to the welding region, the gas supply passage including: an inflow end configured to introduce the gas injected through the gas injection port; a closed end configured to block the gas introduced into the inflow end from proceeding; and a jet port located at a distance from the closed end and open toward the vortex formation section, and configured to jet gas in a circumferential direction of the vortex formation section to form vortex gas by rotating the gas, jetted in the circumferential direction of the vortex formation section, along an inner wall of the vortex formation section.

In some embodiments, the jet port is configured to allow the gas to be jetted within a range of an angle formed by the inner wall of the vortex formation section and a straight line connecting a center of the vortex formation section and a center of the gas supply passage.

In some embodiments, a direction of jet from the jet port is configured to be 90° with respect to a straight line connecting a center of the vortex formation section and a center of the gas supply passage.

In some embodiments, the jet port has a smaller diameter than the gas supply passage.

In some embodiments, the gas supply passage includes a plurality of gas supply passages; and the vortex formation section further includes a manifold configured to distribute the gas injected through the gas injection port to respective inflow ends of the plurality of gas supply passages.

In some embodiments, the manifold includes a plurality of manifolds; and the vortex formation section further includes a branch pipe configured to branch off the gas injected through the gas injection port into the plurality of manifolds.

In some embodiments, the vortex of the gas, jetted from the jet port of the gas supply passage and formed in the vortex formation section, is configured to enter the chamber.

In some embodiments, the members to be welded are a cap plate and a current collector of a secondary battery.

According to some embodiments of the present disclosure, there is provided a laser welding method including: transversely irradiating a laser beam to a welding region between members to be welded; supplying gas to the welding region; and forming vortex gas by the gas supplied to the welding region to discharge the vortex gas together with fumes and spatter generated during welding.

In some embodiments, when forming the vortex gas: the vortex gas is formed by circumferentially jetting the gas supplied to the welding region along an inner wall of a first end of a cylindrical hollow member; and the formed vortex gas is discharged from a second end of the cylindrical hollow member while rotating along the inner wall of the cylindrical hollow member.

In some embodiments, the laser welding method further includes collecting the vortex gas, discharged when forming the vortex gas, in a chamber and releasing the collected vortex gas out of the chamber.

According to some embodiments of the present disclosure, there is provided a secondary battery manufactured using the laser welding method described above.

According to some aspects of the present disclosure, there is provided a secondary battery manufactured using the above laser welding apparatus or laser welding method.

As is apparent from the above description, according to some embodiments of the present disclosure, the transverse (e.g., horizontal) irradiation of the laser can prevent or substantially impede spatter from flowing into the product even if the welding apparatus moves during welding. The suction mechanism in the existing welding apparatus of the related art may have a disadvantage in that it cannot fully collect the spatter and fumes, and they can fall into the product. However, the present disclosure can significantly reduce the occurrence of product defects because in some embodiments it is possible to fully collect and release spatter and fumes through the improved structure, or to perform this better than in the prior art. Consequently, it is possible to achieve an increased rate of good product and an increased rate of operation by minimizing or reducing the interference of fumes and spatter from the laser beams and to reduce the occurrence of defects due to contamination. However, aspects and features of the present disclosure are not limited to the aspects and features described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a cross-sectional view of a cylindrical secondary battery, according to some embodiments of the present disclosure;
FIG. 2A is a top perspective view of a prismatic secondary battery, according to some embodiments of the present disclosure;
FIG. 2B is a cross-sectional view taken along the line I-I' of FIG. 2A, according to some embodiments of the present disclosure;
FIG. 3 is a schematic cross-sectional view of a welding apparatus with a vertically irradiated laser;
FIG. 4 is a conceptual view for explaining a principle of a welding apparatus with a transversely (e.g., horizontally) irradiated laser, according to some embodiments of the present disclosure;
FIG. 5 is a side cross-sectional view of a welding apparatus with a transversely (e.g., horizontally) irradiated laser according to some embodiments of the present disclosure;
FIG. 6A is a projected perspective view of a vortex formation section viewed from a vortex gas outlet, according to some embodiments of the present disclosure;
FIG. 6B is a projected perspective view of the vortex formation section viewed from a gas layer formation part, according to some embodiments of the present disclosure;
FIGS. 6C and 6D are schematic front views conceptually illustrating the vortex formation section in FIGS. 6A and 6B, according to some embodiments of the present disclosure;
FIG. 6E is a schematic view of the vortex formation section viewed from the gas layer formation part, according to some embodiments of the present disclosure;
FIGS. 7A to 7C illustrate an implementation of the welding apparatus with a transversely (e.g., horizontally) irradiated laser according to some embodiments of the present disclosure;
FIG. 8 illustrates simulation data to verify the effect of supplying gas (N₂) at high concentration to a welding region, according to some embodiments of the present disclosure;
FIG. 9A illustrates simulation data to verify a velocity behavior of nitrogen in a vortex formation space, according to some embodiments of the present disclosure;
FIG. 9B illustrates a measurement position in FIG. 9A, according to some embodiments of the present disclosure;
FIG. 9C illustrates simulation data for the velocity behavior of nitrogen in the welding region, according to some embodiments of the present disclosure;
FIG. 9D illustrates simulation data obtained by observing a flow path of vortex gas, according to some embodiments of the present disclosure; and
FIG. 10 is a perspective view of a module arranged with secondary batteries manufactured by the welding apparatus of the present disclosure, according to some embodiments of the present disclosure.

### DETAILED DESCRIPTION

Hereinafter, some embodiments of the present disclosure will be described, in detail, with reference to the accompanying drawings. The terms or words used in the present specification and claims are not to be narrowly interpreted with general or dictionary meanings and should be interpreted with meanings and as concepts that are consistent with the technical idea of the present disclosure on the basis of the principle that an inventor can be his/her own lexicographer to appropriately define concepts of terms to describe his/her invention in a suitable way.

The embodiments described in this specification and the configurations shown in the drawings are only some of the embodiments of the present disclosure and do not represent all of the technical details, aspects, and features of the present disclosure. Accordingly, it should be understood that there may be various equivalents and modifications that can replace or modify the embodiments described herein at the time of filing this application.

It will be understood that when an element or layer is referred to as being "on," "linked to," "connected to," or "coupled to" another element or layer, it may be directly on, linked to, connected, or coupled to the other element or layer or one or more intervening elements or layers may also be present. When an element or layer is referred to as being "directly on," "directly linked to," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration.

The same reference numerals designate the same elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or provided in a plurality.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

Examples of secondary batteries include a coin type, a cylindrical type, a prismatic type, a pouch type, or the like.

Cylindrical and prismatic secondary batteries to which a welding apparatus of the present disclosure is applicable will be briefly described.

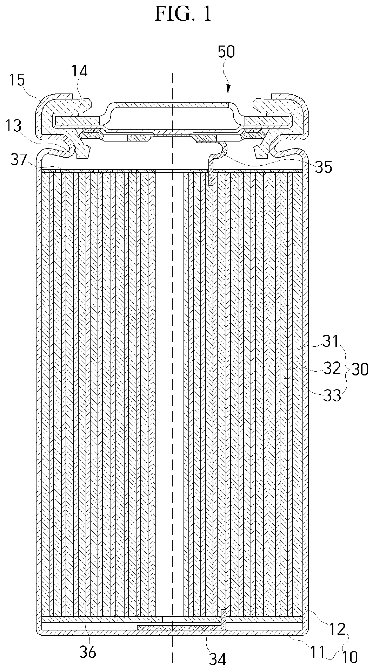

FIG. 1 illustrates a cylindrical secondary battery, according to some embodiments of the present disclosure.

As shown in FIG. 1, a secondary battery may include an electrode assembly 30, a case accommodating the electrode assembly 30 and an electrolyte therein, a cap assembly 50 coupled to an opening of the case 10 to seal the case 10, and an insulating plate 37 positioned between the electrode assembly 30 and the cap assembly 50 inside the case 10.

The electrode assembly 30 may include a separator 32 and a first electrode 33 and a second electrode 31 positioned with the separator 32 interposed therebetween and may be wound in a jelly-roll shape.

The first electrode 33 includes a first substrate and a first active material layer on the first substrate. A first lead tab 35 may extend outwardly from a first uncoated portion of the first substrate where the first active material layer is not located, and the first lead tab 35 may be electrically connected to the cap assembly 50.

The second electrode 31 includes a second substrate and a second active material layer on the second substrate. A second lead tab 34 may extend outwardly from a second uncoated portion of the second substrate where the second active material layer is not located, and the second lead tab 34 may be electrically connected to the case 10. The first lead tab 35 and the second lead tab 34 may extend in opposite directions.

The first electrode 33 may act as a positive electrode. In such embodiments, the first substrate is made of, for example, an aluminum foil, and the first active material layer may include, for example, a transition metal oxide. The second electrode 31 may act as a negative electrode. In such embodiments, the second substrate is made of, for example, a copper foil or a nickel foil, and the second active material layer includes graphite, for example.

The separator 32 prevents or substantially reduces instances of a short-circuit between the first electrode 33 and the second electrode 31 while allowing movement of lithium ions therebetween. The separator 32 may be made of, for example, a polyethylene film, a polypropylene film, a polyethylene-polypropylene film, and/or the like.

The case 10 accommodates the electrode assembly 30 and the electrolyte, and, together with the cap assembly 50, forms the external appearance of the secondary battery. The case 10 may have a substantially cylindrical body portion 12 and a bottom portion 11 connected to one side (e.g., to one end) of the body portion 12. A beading part 13 (e.g., a bead) deformed inwardly may be formed in the body portion 12, and a crimping part 15 (e.g., a crimp) bent inwardly may be formed at an open end of the body portion 12.

The beading part 13 can reduce or prevent movement of the electrode assembly 30 inside the case 10 and can facilitate seating of the gasket and the cap assembly 50. The crimping part 15 may firmly fix the cap assembly 50 by pressing the edge of the case 10 against the gasket 14. The case 10 may be formed of iron plated with nickel, for example.

The cap assembly 50 may be fixed to the inside of the crimping part 15 by a gasket 14 to seal the case 10. The cap assembly 50 may include a cap up, a safety vent, a cap down, an insulating member, and a sub plate; however, embodiments of the present disclosure are not limited thereto and may be modified in various suitable ways.

The cap up may be positioned at the uppermost part of the cap assembly 50. The cap up may include a terminal part that protrudes upwardly and is connected to an external circuit, and an outlet for discharging gas may be arranged around the terminal part.

The safety vent may be located under the cap up. The safety vent may include a protrusion part that protrudes convexly downwardly and is connected to the sub plate, and at least one notch may be formed in the safety vent around the protrusion part.

When gas is generated due to overcharging or abnormal operation of the secondary battery, the protrusion part is deformed upwardly by the pressure and separates from the sub plate while the safety vent is cut (e.g., bursts or tears) along the notch. The cut safety vent may prevent the secondary battery from exploding or substantially reduce likelihood thereof by allowing for the gas to be discharged to the outside.

The cap down may be below the safety vent. The cap down may have a first opening for exposing the protrusion part of the safety vent and a second opening for gas discharge. The insulating member may be positioned between the safety vent and the cap down to insulate the safety vent and the cap down.

The sub plate may be under the cap down. The sub plate may be fixed to a lower surface of the cap down to block the first opening of the cap down, and the protrusion part of the safety vent may be fixed to the sub plate. The first lead tab 35, which is drawn out from the electrode assembly 30, may be fixed to the sub plate. Accordingly, the cap up, the safety vent, the cap down, and the sub plate may be electrically connected to the first electrode 33 of the electrode assembly 30.

The insulating plate 37 may be positioned to be in contact with the electrode assembly 30 below the beading part 13. The insulating plate 37 may have a tab opening through which the first lead tab 35 is drawn out. The cap assembly 50, which is electrically connected to the first electrode 33 by the first lead tab 35, may face the electrode assembly 30 with an insulating plate 37 interposed therebetween and may maintain a state of being insulated (e.g., electrically insulated) from the electrode assembly 30 by the insulating plate 37. Additionally, a different insulating plate 36 may be included for insulation between the electrode assembly 30 and the bottom portion 11 of the case 10.

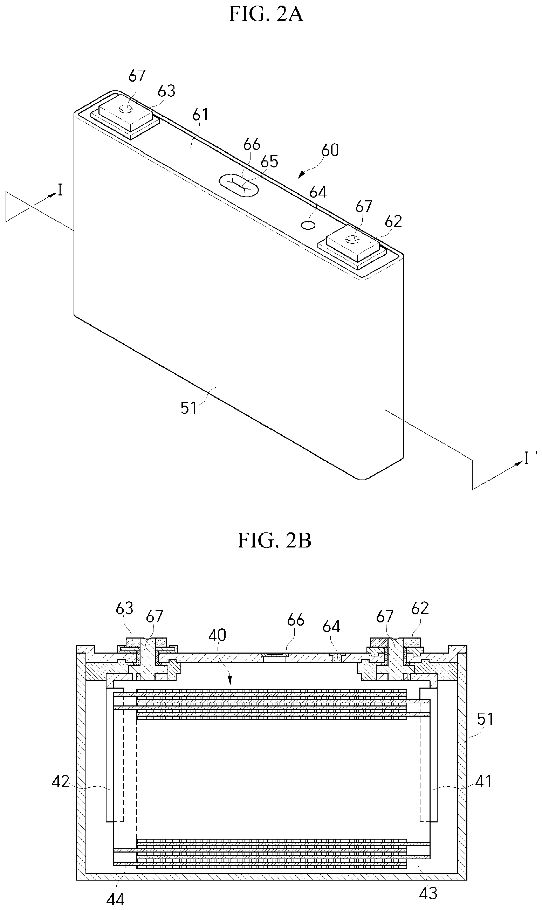

FIG. 2A is a top perspective view of a prismatic secondary battery, according to some embodiments of the present disclosure. FIG. 2B is a cross-sectional view taken along the line I-I' of FIG. 2A, according to some embodiments of the present disclosure.

First, the external appearance of the prismatic secondary battery illustrated in FIG. 2A will be described.

A case 51 defines an overall appearance of the prismatic secondary battery, and may be made of a conductive metal, such as aluminum, aluminum alloy, nickel-plated steel, or the like. In addition, the case 51 may provide a space for accommodating an electrode assembly therein.

A cap assembly 60 may include a cap plate 61 that covers the opening of the case 51. The case 51 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent 66 formed with a notch 65. The vent 66 is for discharging gas generated inside the secondary battery.

With reference to FIG. 2B, the internal structure of the prismatic secondary battery and the coupling structure with the cap assembly 60 will be further described below.

As shown in FIG. 2B, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction (e.g., the y direction) of the case 51. In some other embodiments, the electrode assembly 40 may be a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode, or vice versa.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 may be formed by being cut in advance to protrude to one side of the electrode assembly 40, or the first electrode tab 43 may protrude to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab 43 may be located on the left side of the electrode assembly 40, and the second electrode tab 44 may be located on the right side of the electrode assembly 40. In some other embodiments, the first electrode tab 43 and the second electrode tab 44 may be located on one side of the electrode assembly 40 in the same direction. Here, for convenience of description, the left and right sides are defined according to the secondary battery as oriented in FIG. 1, and the positions thereof may change when the secondary battery is rotated left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, and/or the like.

The first electrode tab 43 of the first electrode plate and the second electrode tab 44 of the second electrode plate may be respectively positioned at both ends (e.g., opposite ends) of the electrode assembly 40. In some embodiments, the electrode assembly 40 may be accommodated in the case 10 along with an electrolyte. In addition, in the electrode assembly 40, the first current collector 41 and the second current collector 42 may be welded and connected to the first electrode tab 43 of the first electrode plate and the second electrode tab 44 of the second electrode plate exposed on both sides, respectively, to then be positioned thereat, respectively.

In secondary batteries, including the cylindrical and prismatic secondary batteries described above, laser welding may be used to bond the members thereof. Examples of the laser welding may include bonding of the terminals 62 and 63 and the connection member 67 and bonding of the vent 66 to the cap plate 61 in the cap assembly 60 described in FIG. 2A.

When welding is performed using a laser, energy is concentrated. When a base material (e.g., member to be welded) is irradiated with a laser beam, heat is generated and transferred to adjacent elements. In this case, fumes and spatter may be generated due to the concentration of the energy - a high energy laser beam. The generated fumes and spatter can interfere with the transmission of the laser beam, which may lead to a risk of quality.

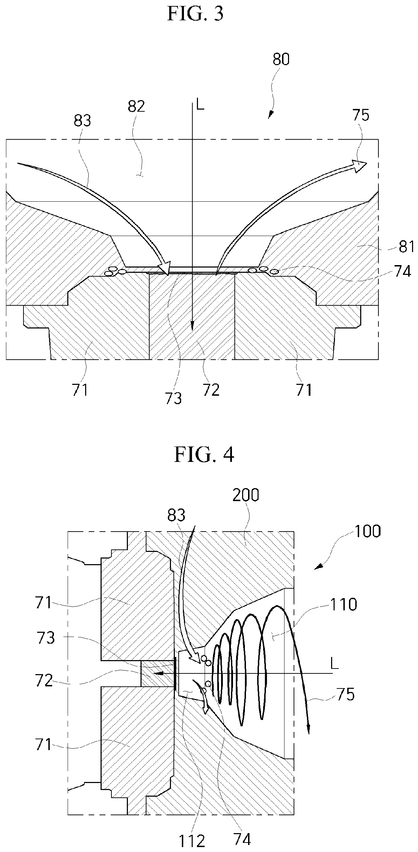

FIG. 3 is a schematic cross-sectional view of a welding apparatus with vertically irradiated laser.

For welding, members to be welded 71 and 72 are welded by installing a shielding device 80 at the top of the welding apparatus and vertically irradiating a laser beam from top to bottom through a chamber 82 therein (i.e., the irradiated laser beam being indicated by "L").

The members to be welded 71 and 72 may be mounted on a welding jig 81 installed in the shielding device 80. The welding jig 81 may be made of a copper material to suit the shape of a specific member to be welded for aligning the position of the member to be welded, ensuring welding accuracy, improving convenience of welding, and so on. Here, reference numeral 73 indicates a region (e.g., a welding region) that is welded, located between the members to be welded 71 and 72, and reference numeral 83 indicates gas (e.g., nitrogen, argon, helium, or the like) supplied to the chamber 82 to improve (e.g., increase) a weld bead formability and a bead quality.

When the welding is performed through downward vertical irradiation of the laser beam in this way, spatter 74 and fumes 75, as mentioned above, may flow or fall into a product (e.g., the secondary battery) by flowing or falling toward the members to be welded 71 and 72, which members are located below the weld bead/shielding device. This may be further aggravated if the shielding device 80 moves up and down during welding.

In the related art, for welding in a secondary battery with a top-terminal structure, in which its terminal is located at the top thereof, a laser beam is irradiated from top to bottom as illustrated in FIG. 3. In this case, spatter 74, which is generated and falls into a welding region 73, may bounce and then fall again due to gravity, which may cause defects by contaminating the welding region 73. And by falling or flowing into the battery.

The laser welding apparatus with a vertically irradiated laser uses a suction mechanism to collect and remove spatter 74 and fumes 75. However, this may have a limitation in that it may not collect all of the spatter and fumes generated in the welding region 73 (e.g., it does not collect the spatter and fumes 100% perfectly).

FIG. 4 is a conceptual view for explaining a principle of a welding apparatus with a transversely (e.g., horizontally) irradiated laser, according to some embodiments of the present disclosure.

The welding apparatus with a transversely (e.g., horizontally) irradiated laser, which is designated by reference numeral 100, may include a chamber 110 through which a laser beam L passes transversely (e.g., horizontally) to irradiate a welding region 73 between members to be welded 71 and 72 with the laser beam L; and a vortex formation space 112 that connects the chamber 110 and the welding region 73 between the members to be welded 71 and 72 and which is designed to supply the welding region with welding gas and to discharge spatter 74 and fumes 75 into the chamber 110 by generating a vortex of the gas.

The members to be welded 71 and 72 may each be a connection member to connect the cap assembly (or cap plate) of the secondary battery and the current collector, but are not limited thereto. The members to be welded 71 and 72 may be, for example, a cap plate and a vent bonded thereto or may, alternatively, be other objects that are used for welding rather than those of the secondary battery.

For transverse (e.g., horizontal) welding of the members to be welded 71 and 72, the welding apparatus with a transversely (e.g., horizontally) irradiated laser 100 according to the present disclosure may be equipped with a welding jig 200 for transverse (e.g., horizontal) mounting of the members to be welded 71 and 72. The members to be welded 71 and 72 are laid and mounted on the welding jig 200 and are transversely (e.g., horizontally) irradiated with the laser beam L.

The end of the chamber 110 included in the welding apparatus 100, namely, the vortex formation space 112 connecting the chamber 110 and the welding region 73, may be in the form of a tube. This tubular space 112 is shown in FIG. 4 as having a tapered shape with a narrowing diameter from the chamber 110 to the welding region 73; however, embodiments of the present disclosure are not limited thereto. The vortex formation space 112 may function to supply the welding region 73 with gas 83, such as nitrogen, argon, and helium, and to discharge spatter 74 and fumes 75 into the chamber 110 with a strong force by generating a vortex of the gas 83. FIG. 4 schematically illustrates a concept in which fumes 75 and spatter 74 are spirally released through the chamber 110 along the vortex of the gas 83.

The spatter 74 generated during welding by transverse (e.g., horizontal) irradiation of the laser according to the present disclosure may accumulate under the welding apparatus 100 or into the vortex formation space 112 rather than the welding region 73. The spatter 74 may be unable to flow to the welding region 73 even if the welding apparatus 100 moves transversely (e.g., horizontally) during welding and therefore may have no (or a lower) possibility of entering the secondary battery. In addition, the fumes 75 may be generated and concurrently (e.g., simultaneously) collected in the chamber 110 along with the strong vortex gas generated in the vortex formation space 112, and then may be quickly and strongly released to the outside. Not only the fumes 75 but also the spatter 74 may be released to the outside along with the vortex gas.

As such, some embodiments of the present disclosure are directed to reducing (e.g., minimizing) the possibility of spatter 74 and fumes 75 flowing into the secondary battery and are intended to fully collect and release all of the spatter 74 and the fumes 75 (e.g., by 100%) through the transverse (e.g., horizontal) irradiation of the laser beam and through the improvement in the structure of the welding apparatus.

Some embodiments for implementing the principle concept of the present disclosure described in FIG. 4 will now be further described.

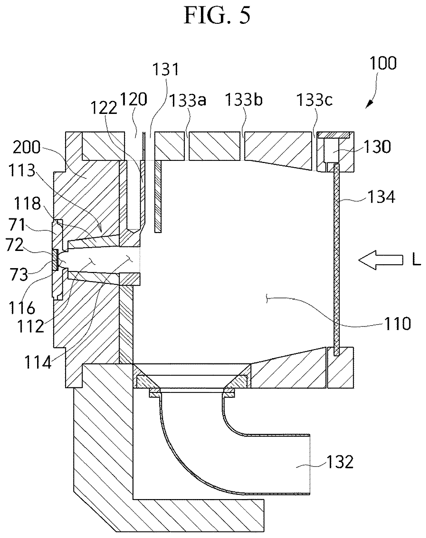

FIG. 5 is a side cross-sectional view of a welding apparatus with a transversely (e.g., horizontally) irradiated laser 100 according to some embodiments of the present disclosure.

As conceptually explained in FIG. 4, the welding apparatus with a transversely (e.g., horizontally) irradiated laser 100 may include a chamber 110 therein and may be equipped with a welding jig 200 for mounting members to be welded 71 and 72.

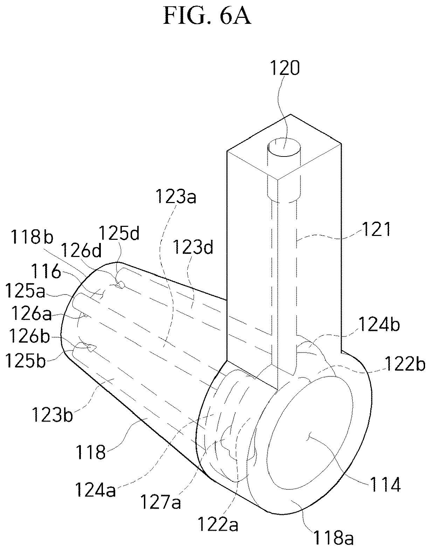

The welding apparatus 100 includes a vortex formation section 113 (see for example Figures 6A to 6E) in contact with a welding region 73 between the members to be welded 71 and 72, which is a structure that defines the vortex formation space 112 described in FIG. 4. The vortex formation section 113 may be in communication with the chamber 110, and a transparent glass shield 134 may be installed on the opposite side of the vortex formation section 113 to seal the chamber 110. A laser beam L may be irradiated transversely (e.g., horizontally) from the outside of the transparent glass shield 134. The irradiated laser beam L may enter the chamber 110 through the glass shield 134 and exit from the chamber 110 at reference numeral 114 to reference numeral 116 through the vortex formation section 113 for welding the welding region 73 between the members to be welded 71 and 72.

Here, reference numeral 114 in the vortex formation section 113 is an entrance port from the point of view of the laser beam L, but will be hereinafter referred to as a vortex gas outlet 114 because it is a place where the vortex gas formed in the vortex formation space 112 exits. In addition, reference numeral 116 in the vortex formation section 113 is an exit port from the point of view of the laser beam L, but will be hereinafter referred to as a gas layer formation part 116 because it is a place where a gas layer is formed to provide gas to the welding region 73 (which will be described further below).

The vortex gas outlet 114 of the vortex formation section 113 may be open to communicate with the chamber 110 as described in FIG. 4, and the gas layer formation part 116 may be open to provide gas to the welding region 73. An outer shape of the vortex formation section 113 may be defined by an outer wall 118 separated from the welding jig 200.

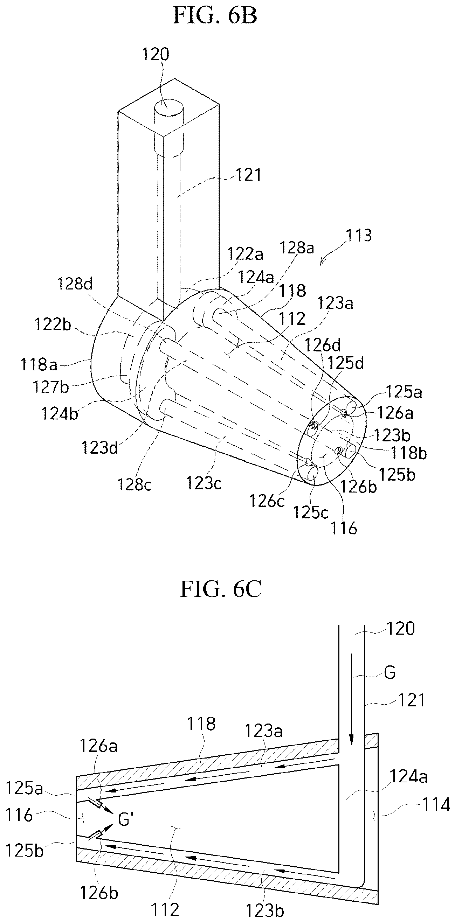

The vortex formation section 113 may be supplied with gas, such as nitrogen, through a gas injection port 120. A further description of the supply of gas to the vortex formation section 113 will be provided below with reference to other drawings. The gas injection port 120 may be separated from the chamber 110 by a partition wall 122 (it may be separated from the chamber 110 in the form of a gas introduction pipe 121 to be described with reference to FIGS. 6A and 6B).

The chamber 110 also includes a release port 132 for releasing vortex gas out of the chamber 110 from the vortex gas outlet 114 of the vortex formation section 113. The release port 132 may be equipped with a suction fan to release vortex gas more effectively; however, embodiments of the present disclosure are not limited thereto. The vortex gas released may include fumes 75 and spatter 74 generated in the welding region 73 during laser welding.

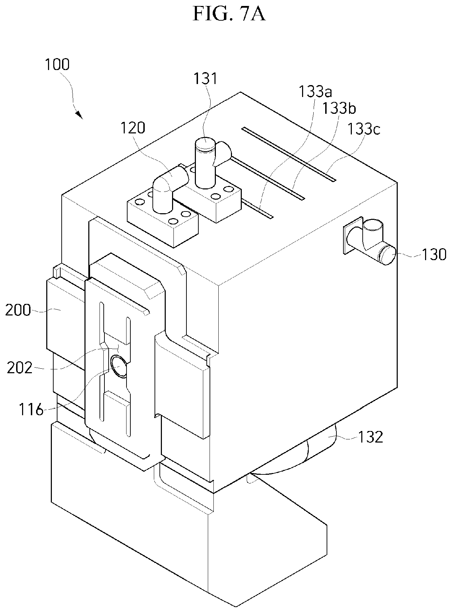

The chamber 110 may be formed with a first vent 131 (see, for example, FIG. 7A to FIG. 7C) to smoothly release vortex gas from the release port 132. In some embodiments, the vortex gas is easily released through the release port 132 by supplying air from the outside to the chamber 110 through the first vent 131. However, in some other embodiments, the first vent 131 is a simple pore for equalizing atmospheric pressure and pressure within the chamber 110.

Moreover, the chamber 110 may be formed with other second vents 133a, 133b, and 133c (see, for example, FIG. 7A to FIG. 7C) to further facilitate the release of the vortex gas through the release port 132. These second vents 133a, 133b, and 133c may be pores for equalizing atmospheric pressure and pressure within the chamber 110. Although the number of second vents is illustrated as three in FIGs. 7A to 7C, the present disclosure is not limited thereto.

In addition, the chamber 110 may include a glass shield vent 130. The glass shield vent 130 may prevent the glass shield 134 from being fogged or contaminated or substantially reduce a likelihood thereof. To this end, the glass shield vent 130 may be designed to be located adjacent to the glass shield 134 and to blow gas in or out, such as air, to create flow along the surface of the glass shield 134; however, embodiments of the present disclosure are not limited thereto.

Hereinafter, the detailed configuration and operation of the vortex formation section 113 will be described.

FIG. 6A is a projected perspective view of the vortex formation section 113 viewed from the vortex gas outlet 114, according to some embodiments of the present disclosure. FIG. 6B is a projected perspective view of the vortex formation section 113 viewed from the gas layer formation part 116, according to some embodiments of the present disclosure.

In the embodiments illustrated in FIGS. 6A and 6B, the outer wall 118 may define the outer shape of the vortex formation section 113. The vortex gas outlet 114 may be defined in outer shape by a first end 118a of the outer wall 118, and the gas layer formation part 116 may be defined in outer shape by a second end 118b of the outer wall 118.

The first end 118a may be connected to a gas introduction pipe 121 in communication with the gas injection port 120. The gas introduction pipe 121 may be branched into a first branch pipe 122a and a second branch pipe 122b by communicating with the inside of the first end 118a. The first branch pipe 122a may have an outlet 127a connected to a first manifold 124a, and the second branch pipe 122b may have an outlet 127b connected to a second manifold 124b. The first manifold 124a may communicate with two gas supply passages 123a and 123b, and the second manifold 124b may communicate with two other gas supply passages 123c and 123d.

According to this structure, when gas, such as nitrogen, is injected through the gas injection port 120, the gas may flow along the gas introduction pipe 121 and branch off from the inside of the first end 118a into the first branch pipe 122a and the second branch pipe 122b. The gas entering the first branch pipe 122a may be sent to the second end 118b along the two gas supply passages 123a and 123b connected to the first manifold 124a. The gas entering the second branch pipe 122b may be sent to the second end 118b along the two gas supply passages 123c and 123d connected to the second manifold 124b.

The configuration of the gas supply passages 123a, 123b, 123c, and 123d will be further described below.

The gas supply passage 123a may include an inflow end 128a in communication with the first manifold 124a for introduction of gas, a closed end 125a blocked at the second end 118b, and a jet port 126a located at a distance from the closed end 125a for jetting of gas toward the vortex formation section 113. Similarly, the gas supply passage 123b may include an inflow end 128b in communication with the first manifold 124a for introduction of gas, a closed end 125b blocked at the second end 118b, and a jet port 126b located at a distance from the closed end 125b for jetting of gas toward the vortex formation section 113.

Likewise, the gas supply passage 123c may include an inflow end 128c in communication with the second manifold 124b for introduction of gas, a closed end 125c blocked at the second end 118b, and a jet port 126c located at a distance from the closed end 125c for jetting of gas toward the vortex formation section 113. In addition, the gas supply passage 123d may include an inflow end 128d in communication with the second manifold 124b for introduction of gas, a closed end 125d blocked at the second end 118b, and a jet port 126d located at a distance from the closed end 125d for jetting of gas toward the vortex formation section 113.

In FIGS. 6A and 6B, the gas supply passages 123a, 123b, 123c, and 123d are illustrated as being formed in the wall of the outer wall 118 and extending to the second end 118b; however, embodiments of the present disclosure are not limited thereto. For example, the gas supply passages 123a, 123b, 123c, and 123d may extend to the second end 118b along the surface of the outer wall 118 in the space within the vortex formation section 113. In addition, the number of gas supply passages 123a, 123b, 123c, and 123d is illustrated as four in FIGS. 6A and 6B; however, embodiments of the present disclosure are not limited thereto. Furthermore, the above-mentioned first and second branch pipes 122a and 122b may also be omitted. In this case, the gas flowing into the gas introduction pipe 121 may directly enter the first and second manifolds 124a and 124b, and then enter the gas supply passages 123a and 123b and 123c and 123d connected to the respective manifolds.

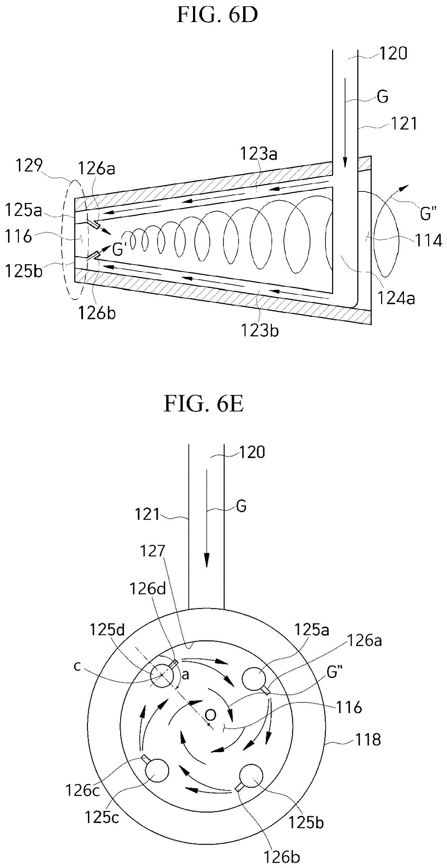

The operation of the vortex formation section 113 configured as above will now be further described with reference to FIGS. 6C, 6D, and 6E.

FIGS. 6C and 6D are schematic front views conceptually illustrating the vortex formation section 113 in FIGS. 6A and 6B, according to some embodiments of the present disclosure. FIG. 6E is a schematic left side view of the vortex formation section 113 viewed from the gas layer formation part 116, according to some embodiments of the present disclosure.

The gas G injected through the gas injection port 120 may enter the first manifold 124a and the second manifold 124b through the gas introduction pipe 121. FIGS. 6C and 6D are schematic views with the above-mentioned first and second branch pipes 122a and 122b omitted for convenience of explanation and better understanding of the operation. In addition, FIGS. 6C and 6D illustrate only the first manifold 124a and the gas supply passages 123a and 123b connected thereto because they are front views of FIGS. 6A and 6B.

The gas G entering the first and second manifolds 124a and 124b may be distributed to the gas supply passages 123a and 123b and 123c and 123d connected to the respective manifolds. The distributed gas may flow to the gas layer formation part 116 through the gas supply passages 123a, 123b, 123c, and 123d. The gas G blocked at the closed ends 125a, 125b, 125c, and 125d of the respective gas supply passages may be jetted from the jet ports 126a, 126b, 126c, and 126d located at a set or predetermined distance from the respective closed ends.

Because the jet ports 126a, 126b, 126c, and 126d are open toward the vortex formation space 112, the jetted gas G' may be directed toward the vortex formation space 112. The jet ports 126a, 126b, 126c, and 126d may each have a relatively smaller diameter than the gas supply passages 123a, 123b, 123c, and 123d. Therefore, the gas G' jetted through the jet ports 126a, 126b, 126c, and 126d may enter the vortex formation space 112 at high speed.

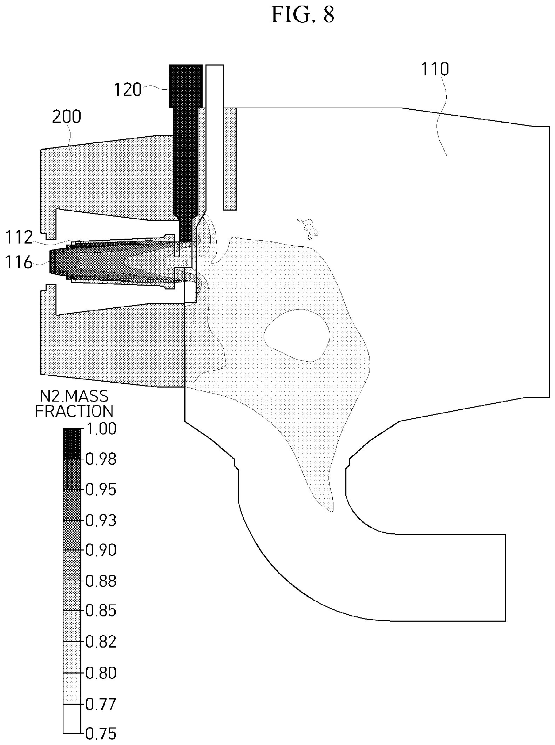

Because the gas G' is jetted from the jet ports 126a, 126b, 126c, and 126d in this way, a gas layer 129 may be formed in the gas layer formation part 116 (see, e.g., FIG. 6D). The gas layer 129 may function to supply gas with a high concentration to the welding region 73. The effect of increasing the concentration of the gas layer 129 is shown in FIG. 8.

FIG. 6D illustrates that the gas G' jetted from the jet ports 126a, 126b, 126c, and 126d forms vortex gas G" in the vortex formation space 112 and is discharged to the vortex gas outlet 114. The vortex gas G" discharged from the vortex gas outlet 114 enters the chamber 110. The principle of formation of the vortex gas G" is shown in FIG. 6E.

Referring to FIG. 6E, the directions of jet from the respective jet ports 126a, 126b, 126c, and 126d are directed in the right circumferential direction, i.e., clockwise, with respect to the inner wall 127 when viewed from the gas layer formation part 116. Therefore, the gas G' rapidly jetted from the jet ports 126a, 126b, 126c, and 126d becomes vortex gas G" in the form of a swirl rotating clockwise along the inner wall 127 in the vortex formation space 112 and exits spirally through the vortex gas outlet 114. The vortex gas G" that has exited enters the chamber 110 illustrated in FIG. 5 and is finally released through the release port 132. If a suction fan is installed at the release port 132 for suction, the vortex gas G" may be released more effectively.

The direction of the jets from each jet port 126a, 126b, 126c, or 126d for formation of the vortex gas G" may be within the range of the angle a formed by the inner wall 127 and the straight line (O-c straight line) connecting the center O of the gas layer formation part 116 or the vortex formation space 112 and the center c of each gas supply passage 123a, 123b, 123c, or 123d, as illustrated in FIG. 6E. However, for greater (e.g., optimal) vortex formation, it may be desirable for the direction of jet from each jet port 126a, 126b, 126c, or 126d be about 90° with respect to the O-c straight line.

FIG. 6E illustrates that the directions of the jets from the jet ports 126a, 126b, 126c, and 126d are clockwise when viewed from the gas layer formation part 116, according to some embodiments. However, in some other embodiments, the directions of the jets from the jet ports 126a, 126b, 126c, and 126d are directed in the left circumferential direction, i.e., counterclockwise, when viewed from the gas layer formation part 116. In this case, the swirl direction of the vortex gas G" will be formed in a direction opposite to that in FIG. 6E.

FIGS. 7A to 7C illustrate an actual implementation of the welding apparatus with the transversely (e.g., horizontally) irradiated laser 100 described above, according to some embodiments of the present disclosure.

FIG. 7A illustrates a state in which the members to be welded 71 and 72 are not mounted on the welding jig 200. The welding jig 200 is installed on one side of the housing of the laser welding apparatus 100. The welding jig 200 has a mounting part (e.g., a member-to-be-welded mounting part) 202 for mounting the members to be welded 71 and 72 thereon. As mentioned above, the mounting part 202 may be modified to suit the type, shape, and the like of each member to be welded. The gas layer formation part 116 of the vortex formation section (e.g., 113 in FIG. 5) is located in the mounting part 202. When the members to be welded 71 and 72 are mounted on the mounting part 202, the gas layer formation part 116 comes into contact with the welding region 73 between the members to be welded 71 and 72. The gas injection port 120 and the first vent 131 are installed on the upper surface of the housing of the laser welding apparatus 100. The second vents 133a, 133b, and 133c are formed on the upper surface of the housing. The glass shield vent 130 is located on the right side of the housing. The release port 132 is located on the bottom of the housing.

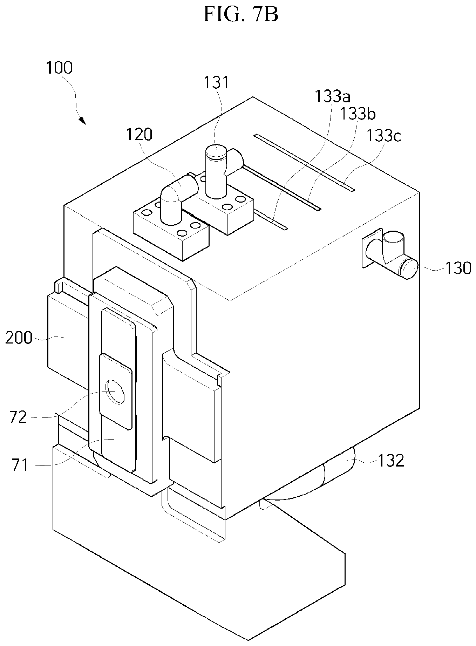

FIG. 7B illustrates a state in which the members to be welded 71 and 72 are mounted on the welding jig 200. The members to be welded 71 and 72 are mounted on the mounting part 202 illustrated in FIG. 7A.

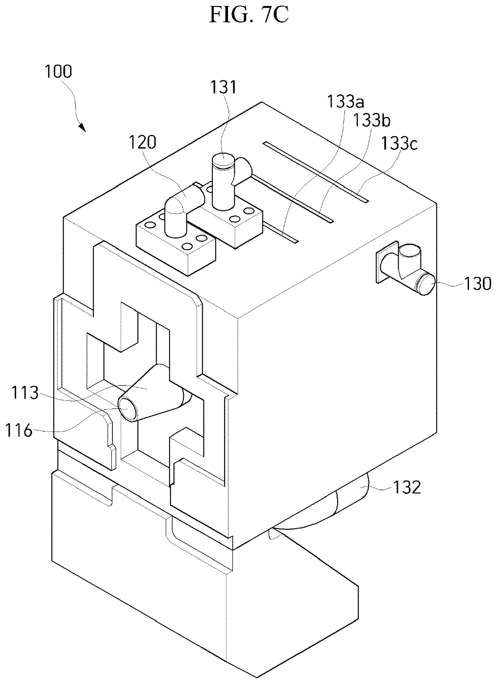

FIG. 7C illustrates a state in which the welding jig 200 is removed. In FIG. 7C, the vortex formation section 113 is shown in which a laser beam L is irradiated, a gas layer is formed, and vortex gas is formed.

FIG. 8 illustrates simulation data to verify the effect of supplying gas (e.g., N₂) at high concentration to the welding region 73 in the welding apparatus with transversely (e.g., horizontally) irradiated laser 100 according to some embodiments of the present disclosure. As described above, the quality of laser welding can be improved (e.g., increased) by supplying gas to the vortex formation section 113 through the gas injection port 120 to form the gas layer 129. Referring to FIG. 8, the highest nitrogen concentration (N₂ mass fraction = 1.0) appears in the gas injection port 120 for injection of nitrogen (N₂) and the gas layer formation part 116 is supplied with a relatively high level of nitrogen concentration (N₂ mass fraction = 0.95 to 0.98). This concentration at the gas layer formation part is an increase in 96% compared to the laser welding apparatus of the related art.

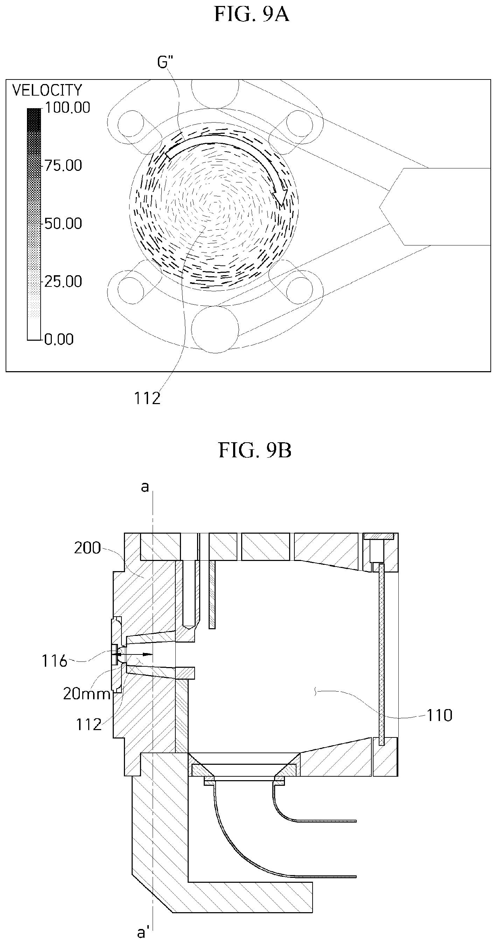

FIG. 9A illustrates simulation data to verify a velocity behavior of nitrogen in the vortex formation space 112 in the welding apparatus with transversely (e.g., horizontally) irradiated laser 100 according some embodiments of the present disclosure.

The data in FIG. 9A is a measurement of the velocity of the nitrogen at a position of 20 mm from the gas layer formation part 116 toward the chamber 110, namely, on the a-a' plane of the vortex formation space 112, as illustrated in FIG. 9B. As illustrated in FIG. 9A, the velocity in the vortex formation space 112 may range from about 50 m/s at the center thereof to about 80 m/s at the periphery thereof. The clockwise arrow indicated in FIG. 9A refers to the vortex gas G" described above. As illustrated, nitrogen forms a vortex and shifts at high velocity in the vortex formation space 112.

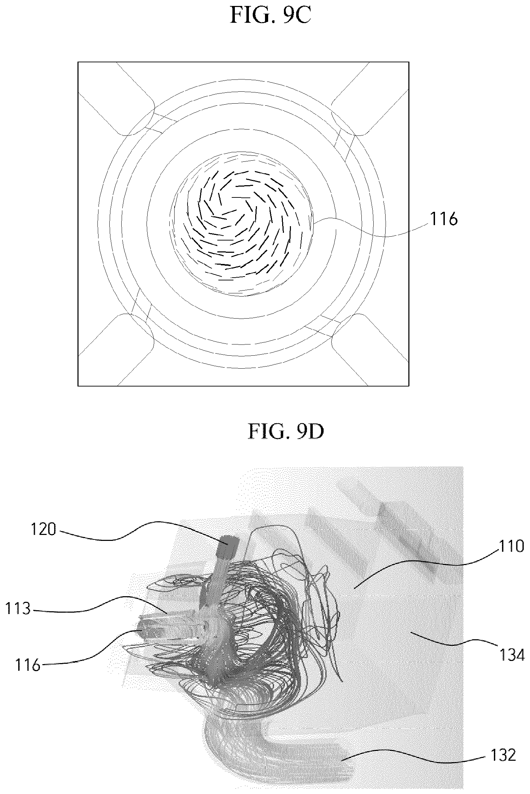

FIG. 9C illustrates simulation data for the velocity behavior of nitrogen in the gas layer formation part 116, i.e., the welding region 73, according to some embodiments of the present disclosure. In the gas layer formation part 116, nitrogen rotates at a velocity of about 25 m/s. Therefore, the nitrogen increases rapidly in velocity from the gas layer formation part 116 to the vortex formation space 112, compared to FIG. 9A.

FIG. 9D illustrates simulation data obtained by observing a flow path of the vortex gas in the welding apparatus with a transversely (e.g., horizontally) irradiated laser 100 according to some embodiments of the present disclosure. The flow path is shown in which the gas (e.g., nitrogen) injected through the gas injection port 120 forms the gas layer at high concentration in the gas layer formation part 116, enters the chamber 110 via the vortex formation section 113, and is then released through the release port 132. This simulation data verified that vortex gas was released fully through the release port 132 rather than toward the glass shield 134.

A welding method with a transversely (e.g., horizontally) irradiated laser according to the present disclosure will be further described below. The welding method may include transversely (e.g., horizontally) irradiating a laser beam to a welding region between members to be welded; supplying gas to the welding region; and forming vortex gas by the gas supplied to the welding region to discharge the vortex gas together with fumes and spatter generated during welding.

Here, the forming of the vortex gas may be performed by circumferentially jetting the gas supplied to the welding region along an inner wall of a first end of a cylindrical hollow member such as a vortex formation space 112 of a vortex formation section 113. The gas jetted circumferentially along the inner wall of the first end of the cylindrical hollow member may be discharged in the form of a swirl from a second end of the cylindrical hollow member while rotating along the inner wall.

In addition, the vortex gas that is discharged may be collected in a chamber, and the collected vortex gas may be released out of the chamber.

The welding method with a transversely (e.g., horizontally) irradiated laser according to the present disclosure may be performed using the welding apparatus with a transversely (e.g., horizontally) irradiated laser 100 as described above.

Hereinafter, any material that may be usable for the secondary battery according to the present disclosure will be further described below.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used as the composite oxide: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001 ≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f})Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al); however, embodiments of the present disclosure are not limited thereto.

The negative electrode active material may include a material capable of reversibly intercalating/deintercalating lithium ions, lithium metal, an alloy of lithium metal, a material capable of being doped and undoped with lithium, a transition metal oxide, and/or the like.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to some embodiments, the silicon-carbon composite is in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

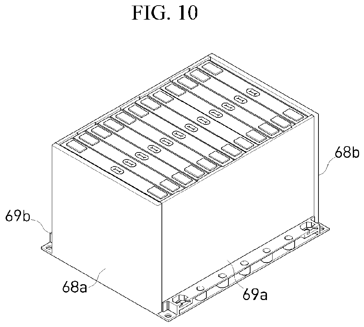

FIG. 10 is a perspective view of a secondary battery module in which prismatic secondary batteries (as illustrated in FIG. 2A or 2B) are arranged according to some embodiments of the present disclosure. With the increase in secondary battery capacity for driving electric vehicles or the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in arrangement (e.g., direction) and number to obtain desired voltage and current values.

The secondary battery modules may be integrated to a battery pack to be utilized for end products, e.g., electric vehicles. The battery pack may include an assembly to which individual batteries are electrically connected and a housing accommodating the same. The housing may include components including a bus bar, a cooling unit, external terminals for electrically connecting batteries, etc.

The battery pack may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto.

It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the invention as defined by the following claims and equivalents thereof.

## Claims

1. A laser welding apparatus comprising:
a chamber configured to pass therethrough a laser beam irradiated transversely to a welding region between members to be welded; and
a vortex formation section configured to connect the welding region between the members to be welded and the chamber, to supply the welding region with gas, and to form and discharge a vortex of the gas.

2. The laser welding apparatus as claimed in claim 1, wherein the vortex formation section comprises:
a gas layer formation part configured to supply the gas to the welding region; and
a vortex gas outlet through which the vortex of the gas formed inside the vortex formation section is configured to exit.

3. The laser welding apparatus as claimed in claim 1 or claim 2, wherein the chamber comprises a release port configured to release the vortex of the gas formed in the vortex formation section out of the chamber.

4. The laser welding apparatus as claimed in any one of the preceding claims, wherein the chamber comprises a transparent glass shield configured to allow transmission of the laser beam irradiated transversely from the outside.

5. The laser welding apparatus as claimed in claim 4, wherein the chamber further comprises a glass shield vent in communication with the outside.

6. The laser welding apparatus as claimed in any one of the preceding claims, wherein the chamber comprises at least one vent in communication with the outside.

7. The laser welding apparatus as claimed in any one of the preceding claims, wherein the vortex formation section includes a tapered tube whose diameter gradually decreases from the chamber to the welding region.

8. The laser welding apparatus as claimed in any one of the preceding claims, wherein the vortex formation section comprises:
a gas injection port configured to inject gas; and
a gas supply passage configured to supply the gas injected through the gas injection port to the welding region, the gas supply passage comprising:
an inflow end configured to introduce the gas injected through the gas injection port;
a closed end configured to block the gas introduced into the inflow end from proceeding; and
a jet port located at a distance from the closed end and open toward the vortex formation section, and configured to jet gas in a circumferential direction of the vortex formation section to form vortex gas by rotating the gas, jetted in the circumferential direction of the vortex formation section, along an inner wall of the vortex formation section.

9. The laser welding apparatus as claimed in claim 8, wherein the jet port is configured to allow the gas to be jetted within a range of an angle formed by the inner wall of the vortex formation section and a straight line connecting a center of the vortex formation section and a center of the gas supply passage.

10. The laser welding apparatus as claimed in claim 8 or claim 9, wherein:
the gas supply passage comprises a plurality of gas supply passages; and
the vortex formation section further comprises a manifold configured to distribute the gas injected through the gas injection port to respective inflow ends of the plurality of gas supply passages.

11. The laser welding apparatus as claimed in claim 10, wherein:
the manifold comprises a plurality of manifolds; and
the vortex formation section further comprises a branch pipe configured to branch off the gas injected through the gas injection port into the plurality of manifolds.

12. The laser welding apparatus as claimed in any one of claims 8 to 11, wherein the vortex of the gas, jetted from the jet port of the gas supply passage and formed in the vortex formation section, is configured to enter the chamber.

13. A laser welding method comprising:
transversely irradiating a laser beam to a welding region between members to be welded;
supplying gas to the welding region; and
forming vortex gas by the gas supplied to the welding region to discharge the vortex gas together with fumes and spatter generated during welding.

14. The laser welding method as claimed in claim 13, wherein when forming the vortex gas:
the vortex gas is formed by circumferentially jetting the gas supplied to the welding region along an inner wall of a first end of a cylindrical hollow member; and
the formed vortex gas is discharged from a second end of the cylindrical hollow member while rotating along the inner wall of the cylindrical hollow member.

15. The laser welding method as claimed in claim 13 or claim 14, further comprising collecting the vortex gas, discharged when forming the vortex gas, in a chamber and releasing the collected vortex gas out of the chamber.
